# EUROPEAN PATENT APPLICATION

(11) **EP 2 665 255 A1**
(43) Date of publication of application: **20.11.2013**
(21) Application number: 12305533.7
(22) Date of filing: 14.05.2012
(51) Int. Cl.: H04N 5/278, H04N 21/488

(54) **Solution for sub-titling of images and image sequences**

(71) Applicant: Thomson Licensing, 92130 Issy-les-Moulineaux (FR)
(72) Inventor: Winter, Marco, 30659 Hannover (DE); Putzke-Roeming, Wolfram, 31137 Hildesheim (DE); Jachalsky, Joern, DE 30974 Wennigsen (DE)
(74) Representative: Schmidt-Uhlig, Thomas

(57) **Abstract**

A method for enhanced sub-titling of an image (1) or a sequence of images described. The method comprises the steps of:
- retrieving metadata provided for the image (1) or the sequence of images;
- placing a sub-title (3) within the image (1) or the sequence of images in accordance with information conveyed by the metadata; and
- optionally highlighting a speaker (2) and/or another sound source in the image (1) or the sequence of images based on information conveyed by the metadata.

## Description

The present invention is related to a solution for sub-titling of images or image sequences. More specifically, the invention is related to a solution for sub-titling with a speaker identification. According to a further aspect of the invention, a solution for sub-titling with a flexible placement of the sub-titles is described.

In the following sub-titling will be discussed in relation to image sequences, or simply 'video'. Of course, sub-titling may likewise be done for single images. The solutions according to the invention are suitable for both applications.

Today sub-titles are usually placed at the bottom of the video. As a result, reading of the sub-titles often causes some problems to follow the scene, i.e. to miss some of the mimics and other visual details of the particular scene. This problem is even stronger for disabled people like hearing impaired people, because they are often unable to use voice recognition of the spoken words to assign the current sub-title to the correct person, i.e. the person that is actually speaking. The context of the text may be not always obvious as desired. However, support for disabled people is getting more and more important and is sometimes even required by law.

In order to simplify the assignment of the sub-titles to the correct person, US 2006/0262219 proposes to place sub-titles close to the corresponding speaker. In addition to the placement of the sub-titles, also talk bubbles may be displayed and linked to the corresponding speaker using a graphical element. To this end positioning information, which is transmitted together with the sub-titles, is evaluated.

Though the above solution improves the allocation of the sub-titles to the speaker, it is not flexible. The placement of the sub-titles is fully defined by the broadcaster of the video.

In this regard JP 2008-039841 discloses a solution for preventing display of captions or other additional information in undesired parts of an image or a video. To this end a keep-out area is defined in the metadata associated to the image or the video, in which captions must not be displayed. The captions are then placed somewhere else in the image or the video.

This solution ensures that important areas of the image or the video are not covered by captions or the like. However, it does not provide any support for enhanced sub-titling solutions.

It is an object of the present invention to propose a more flexible and advanced solution for enhanced sub-titling of an image or a sequence of images.

According to the invention, this object is achieved by a method for enhanced sub-titling of an image or a sequence of images, which comprises the steps of:
- retrieving metadata provided for the image or the sequence of images, e.g. from a local storage and/or a network;
- placing a sub-title within the image or the sequence of images in accordance with information conveyed by the metadata; and
- optionally highlighting a speaker and/or another sound source in the image or the sequence of images based on information conveyed by the metadata.

Likewise, an apparatus for playback of an image or a sequence of images is adapted to perform a method as described above for enhanced sub-titling of the image or the sequence of images.

The invention describes a number of solutions for visually linking a current sub-title with the person who is actually speaking. For this purpose the information conveyed by the metadata comprises an area for placement of the sub-title. Alternatively, also forbidden areas may be defined. With this information a set top box is able to place appropriate additional sub-titles to a video content automatically or at least semi-automatically. In both cases highlighting the speaker is then achieved by placing a sub-title close to the speaker. The information about the area for placement of the sub-title enables to automatically position the sub-title closer to the speaking person without annoying effects of text covering important parts of the particular scene. The user has the option to activate these visual hints, e.g. using the remote control of a set top box.

Alternatively or in addition, the information conveyed by the metadata comprises at least one of a location of a sound source, information about position and size of an identifier for highlighting the speaker and/or the other sound source, and shape of the speaker and/or the other sound source. Examples of such identifiers are a halo, shock-waves and an aura. The content transmitted by a broadcaster or a content provider is provided with metadata about the location and other data of the speaker or other sound sources. These metadata are then used to highlight the speaker or the other sound source with an identifier.

Preferably, the information conveyed by the metadata comprises information about pauses between spoken words. This information is preferably used to support a pulsing of the identifier used for highlighting the speaker, i.e. to suggest that there are words spoken.

According to a further aspect of the invention, a method for generating metadata for enhanced sub-titling of an image or a sequence of images comprises the steps of:
- determining information suitable for highlighting a speaker and/or another sound source in the image or the sequence of images; and
- storing the determined information.

Similarly, an apparatus for generating metadata for enhanced sub-titling of an image or a sequence of images is adapted to perform a method as described above for generating metadata for enhanced sub-titling.

According to this further aspect, a user or a content author has the possibility to interactively define information suitable for highlighting a speaker and/or another sound source in the image or the sequence of images. Also further information about areas for placement of the sub-titles and/or areas that are forbidden for sub-titles may be defined. The determined information helps to optimize an automatic sub-title and/or sub-picture placement. The determined information is preferably shared with other users of the content, e.g. via the homepage of the content provider.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: schematically illustrates the interconnection of video, metadata, broadcaster, content provider, internet, user, and finally display;
- Fig. 2: shows a conventional sub-title;
- Fig. 3: shows a sub-title associated to an object in the scene;
- Fig. 4: shows a sub-title associated to an object in the scene and a halo to highlight the person who is speaking;
- Fig. 5: illustrates special information indicated by metadata;
- Fig. 6: shows an alternative solution for highlighting the person who is speaking using shockwaves;
- Fig. 7: illustrates special information indicated by metadata for the solution of Fig. 6; and
- Fig. 8: shows yet a further alternative solution for highlighting the person who is speaking using an aura.

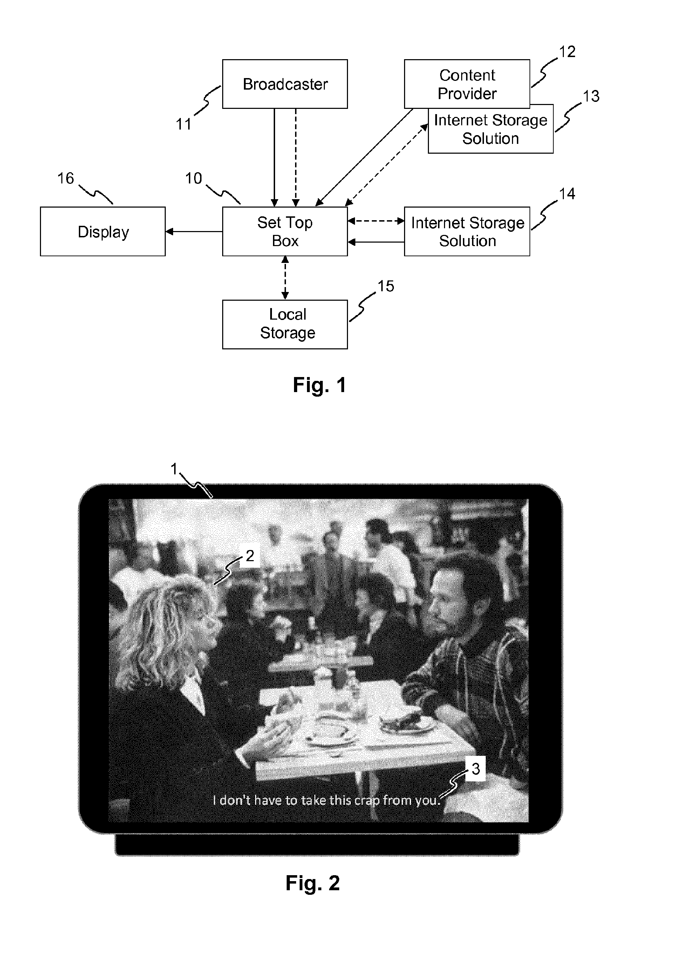

Fig. 1 schematically illustrates the interconnection of video, metadata, broadcaster, content provider, internet, user, and finally display. In the figure, the transmission of content, i.e. video data, is designated by the solid arrows. The transmission of metadata is designated by the dashed arrows.

Apparently, content plus the associated metadata will typically transmitted to the user's set top box 10 directly from a broadcaster 11. Of course, content and metadata may likewise be provided by the content provider 12. For example, the content and at least some or even all of the metadata may be stored on optical disks or other storage media, which are sold to the user. Additional metadata is then made available by the content provider 12 via an internet storage solution 13. Of course, also the content or the additional content may be provided via the internet storage solution 13. Similarly, both content and metadata may be provided via an internet storage solution 14 that is independent from the content provider 12. In addition, both the internet storage solution 13 provided by the content provider 12 as well as the independent internet storage solution 14 may offer the possibility to upload metadata from the user. Finally, metadata may be stored in and retrieved from a local storage 15 at the user side. In any case the content and the metadata are evaluated by the set top box 10 to generate an output on a display 16.

Fig. 2 show a video scene 1 with a conventional sub-title 3. The sub-title is placed at the bottom of the scene 1. There is no special visual indication of the person 2 who is currently speaking. However, some color coding of the sub-title may be employed. In any case the sub-title placement is fully static as decided by the broadcaster 11 or the content provider 12.

According to the invention, based on the metadata that are made available for the content, the user has the option to activate certain automatic visual hints to mark the person who is currently speaking, or to visualize sound. Preferably, the activation can be done using a remote control of the set top box.

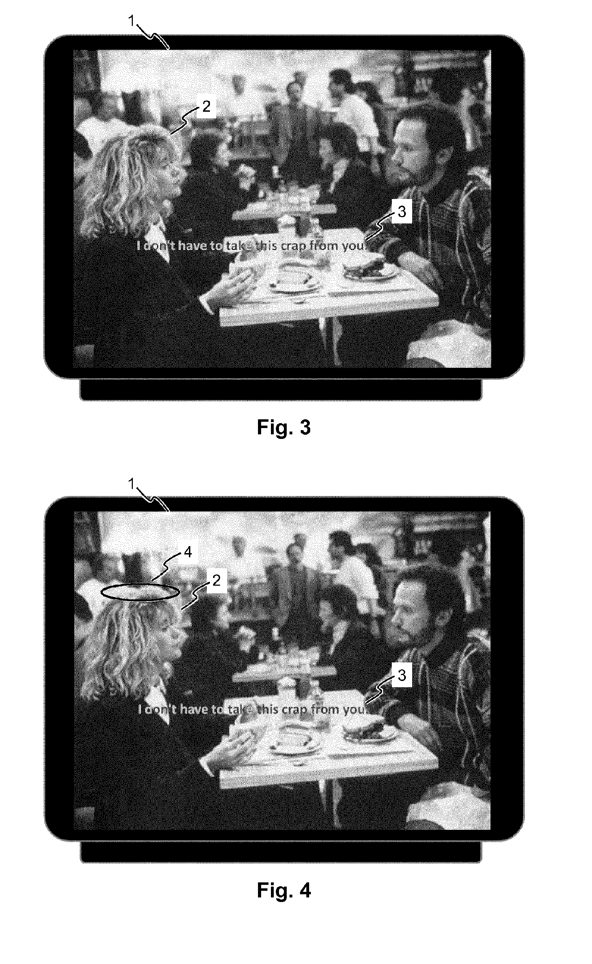

A first solution for a visual hint is to place the sub-title 3 closer to the correct person 2. This is illustrated in Fig. 3. As shown in Fig. 4, an additional halo 4 above the speaker 2 may further emphasize the speaker 2. Of course, the halo 4 can likewise be used with the normal placement of the sub-title 3 at the bottom of the scene 1.

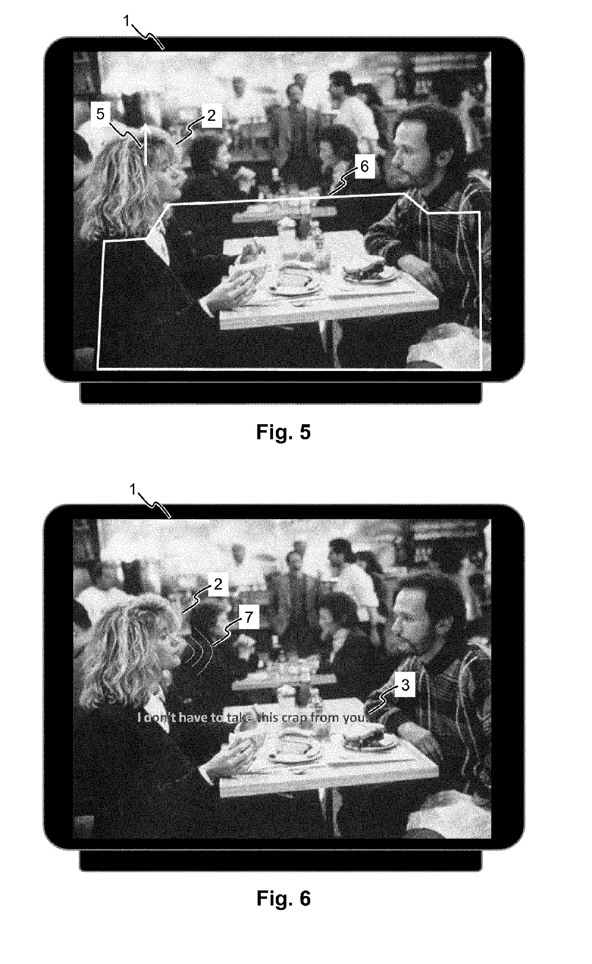

Fig. 5 schematically illustrates some special information indicated by the metadata that are preferably made available in order to achieve the visual hints. First, there is an arrow or vector 5 from the center of the head to the top of the head of the speaker 2, or, more generally, information about the location and the size of the halo 4. Furthermore, an area 6 specifies where in the scene 1 the sub-title 3 may be placed. The area 6 may be the same for both persons in the scene 1. The most appropriate location is advantageously determined by the set top box 10 based on the available information, especially the location information conveyed by the arrow or vector 5.

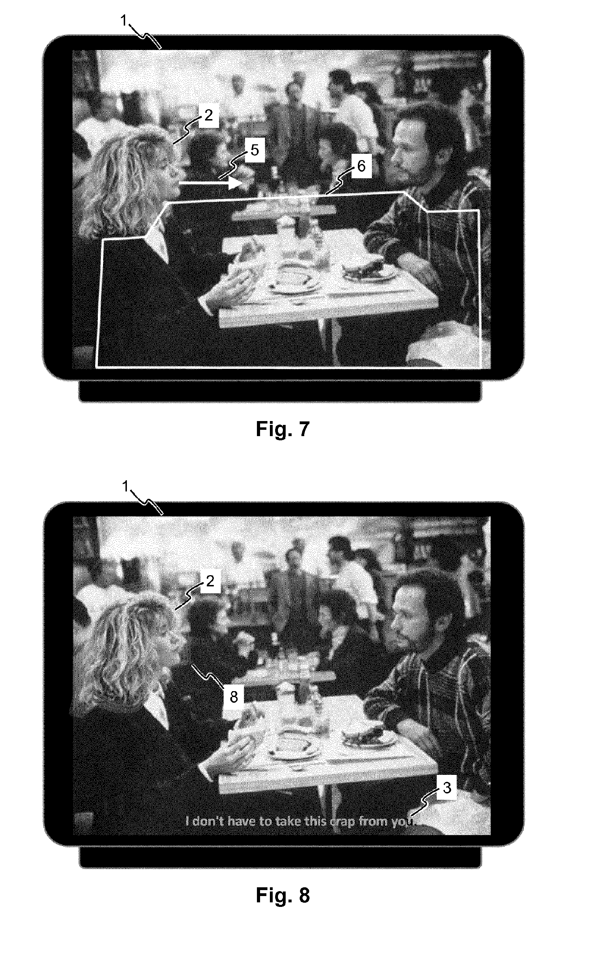

Yet another solution for a visual hint is depicted in Fig. 6. Here lines 7 are drawn around the mouth or other sound sources to suggest shock-waves. The lines 7 may likewise be drawn around the whole head. Here, more detailed metadata about the precise location and shape of the lines 7 are necessary, as illustrated in Fig. 7. An arrow or vector 5 specifies the source of the shock-waves 7 at the speaker's mouth, the orientation of the shock-waves 7, e.g. towards the listener, and the size of the shock-waves 7. Again, an area 6 specifies where in the scene 1 the sub-title 3 may be placed.

The shock-waves 7 may not only be used visualize speech, but also to make other sound sources visible, e.g. a car's hood if the car makes perceivable noise. Due to the different type of audio source, such sound lines may be drawn in addition to the sub-title 3 as there is no danger of confusion caused by the sub-title 3 and the different visually marked sound sources, e.g. the speaker's mouth and the hood of the car.

Advantageously, the lines 7 pulse in accordance with the pauses between spoken words. This is either achieved using additional metadata or sound analysis performed by the set top box, or the pulses are independent of the real spoken words, i.e. they only suggest that there are words spoken.

A further possibility for a visual hint is illustrated in Fig. 8. Here a corona or aura 8 is drawn around the speaker 2. The aura or corona 8 may pulse somewhat to visualize the words and to make the visualization simpler to recognize by the user. Alternatively or in addition, the speaker 2 may be lightened or brightened. For both cases detailed information about the shape of the speaking person 2 is necessary.

Of course, the above proposed solutions may be combined and the metadata advantageously includes the necessary information for several or even all solution. The user then has the possibility to choose how the speakers shall be identified, as well as if and how the sub-title shall be placed.

The sub-title or speaker related metadata enable a number of further possibilities. For example, the user has the possibility to add sub-titles independent of the source content. He may download additional sub-titles from the internet storage solution 13 of the content provider 12 in real-time. Likewise, the user may generate his own sub-titles for own use or to make his work public for a larger community via the Internet. This is rather interesting especially for small countries without own audio synchronization. The sub-title area 6 allows to place the original sub-titles 3 at a different position than originally specified, i.e. more appropriate for the user's preferences. Of course, the allowed sub-title area 6 may also be specified by the user. Alternatively, the user may mark forbidden areas within the scene 1, e.g. in an interactive process, in order to optimize an automatic placement of sub-titles or other sub-pictures. The allowed or forbidden areas 6 may then be shared with other users of the content, e.g. via the internet storage solution 13 of the content provider 12.

For marking a part of the scene, e.g. one frame out of the scene, the superpixel method is preferably used, i.e. only superpixels need to be marked. This simplifies the marking process. The superpixels are either determined by the set top box 10 or made available as part of the metadata. The superpixel method is described, for example, in J. Tighe et al.: "Superparsing: scalable nonparametric image parsing with superpixels", Proc. European Conf. Computer Vision, 2010. Furthermore, inside the same take the marked areas are advantageously automatically completed for the temporally surrounding frames of this scene, e.g. by recognition of the corresponding superpixels in the neighboring frames. In this way a simple mechanism may be implemented for marking appropriate objects of a whole take and areas for placing sub-titles and projecting halos, auras and shockwaves requiring only a limited amount of user interaction.

These metadata may be contributed to the internet community by sending the generated metadata to an internet storage solution. Such metadata may also be used by the content provider himself for enhancing the value of the already delivered content and to get a closer connection to his content users. Usually, there is no direct link between content providers 12 and the user. With such offers by the content providers, i.e. free storage of metadata, sharing of user generated metadata, the content provider 12 gets directly into contact with the viewers.

## Claims

1. A method for enhanced sub-titling of an image (1) or a sequence of images, the method **comprising** the steps of:
- retrieving metadata provided for the image (1) or the sequence of images;
- placing a sub-title (3) within the image (1) or the sequence of images in accordance with information conveyed by the metadata; and
- optionally highlighting a speaker (2) and/or another sound source in the image (1) or the sequence of images based on information conveyed by the metadata.

2. The method according to claim 1, **wherein** the information conveyed by the metadata comprises an area (6) for placement of the sub-title (3).

3. The method according to claim 2, **wherein** highlighting a speaker (2) comprises placing a sub-title (3) close to the speaker (2).

4. The method according to one of claims 1 to 3, **wherein** the information conveyed by the metadata comprises at least one of a location of a sound source, information about position and size of an identifier for highlighting the speaker (2) and/or the other sound source, and shape of the speaker (2) and/or the other sound source.

5. The method according to claim 4, **wherein** the identifier is at least one of a halo (4), shock-waves (7) and an aura (8) .

6. The method according to one of the preceding claims, **wherein** the information conveyed by the metadata comprises information about pauses between spoken words.

7. The method according to one of the preceding claims, **wherein** the metadata are retrieved from a local storage (15) and/or a network (13, 14).

8. An apparatus (10) for playback of an image (1) or a sequence of images, **characterized in that** the apparatus (10) is adapted to perform a method according to one of claims 1 to 7 for enhanced sub-titling of the image (1) or the sequence of images.

9. A method for generating metadata for enhanced sub-titling of an image (1) or a sequence of images, the method **comprising** the steps of:
- determining information suitable for highlighting a speaker (2) and/or another sound source in the image (1) or the sequence of images; and
- storing the determined information.

10. The method according to claim 9, **wherein** the determined information comprises at least one of a location of a sound source, information about position and size of an identifier for highlighting the speaker (2) and/or the other sound source, and shape of the speaker (2) and/or the other sound source.

11. The method according to claim 9 or 10, **further** comprising the steps of:
- determining an area (6) within the image (1) or the sequence of images for placement of the sub-title (3)
- storing information about the determined area (6).

12. The method according to one of claims 9 to 11, **wherein** the determined information and/or the information about the determined area (6) is stored on a local storage (15) or in a network (13, 14).

13. An apparatus (10) for generating metadata for enhanced sub-titling of an image (1) or a sequence of images" **characterized in that** the apparatus (10) is adapted to perform a method according to one of claims 9 to 12 for generating metadata for enhanced sub-titling.

14. A storage medium, **characterized in that** the storage medium comprises information suitable for highlighting a speaker (2) and/or another sound source in an image (1) or a sequence of images.

15. The storage medium according to claim 14, **wherein** the storage medium further comprises the image (1) or the sequence of images.
